# EUROPÄISCHE PATENTSCHRIFT

(11) **EP 3 877 687 B1**
(45) Veröffentlichungstag und Bekanntmachung des Hinweises auf die Patenterteilung: **13.09.2023**
(21) Anmeldenummer: 19800999.5
(22) Anmeldetag: 06.11.2019
(51) Int. Cl.: F16L 33/207

(54) **SCHRUMPFRING**
SHRINK-FIT COLLAR
BAGUE DE SERRAGE

(30) Priorität: 07.11.2018 WO PCT/EP2018/080452
(43) Veröffentlichungstag der Anmeldung: 15.09.2021
(73) Patentinhaber: Oetiker Schweiz AG, 8810 Horgen (CH)
(72) Erfinder: MIESSMER, Stefan, 8004 Zürich (CH)
(74) Vertreter: Strehl Schübel-Hopf & Partner
(86) Internationale Anmeldenummer: PCT/EP2019/080440
(87) Internationale Veröffentlichungsnummer: WO 2020/094740

(56) Entgegenhaltungen:
- EP-A1- 0 122 329
- EP-A1- 0 728 979
- EP-A1- 1 243 836
- WO-A1-99/39123
- US-A- 5 868 435

## Beschreibung

### Stand der Technik

Sogenannte Multi-Crimp-Ringe oder Schrumpfringe werden in unterschiedlichen Ausführungen hergestellt. In einem bekannten Verfahren wird ein axial oder längs einer Schraubenlinie geschweißtes Rohr in Ringe gewünschter Breite zerteilt. Alternativ werden von einem entsprechend der gewünschten Ringbreite gespaltenen Band dem Ringumfang entsprechende Längen gerade oder schräg abgeschnitten, dann zum Ring gerundet und die beiden Enden stumpf miteinander verschweißt.

Zum Schrumpfen wird der Ring mittels eines Werkzeugs mit mehreren radial einwärts wirkenden Pressbacken komprimiert. Bei diesem auch als Multicrimpen bezeichneten Schrumpfvorgang besteht bei ungenügender Bandstärke die Gefahr, dass der Ring einknickt.

Ein gattungsgemäßer Schrumpfring ist in DE 10 2007 008 274 A1 beschrieben. Der darin beschriebene Ring wird durch radiales Multicrimpen im Überlappungsbereich mit einem Rohr auf einen Schlauch gepresst. Er zeigt im Querschnitt eine zweimal radial nach innen gewölbte Struktur, wobei die radial innen liegenden Abschnitte gerundet sind, um den Schlauch zu schonen.

Ein weiterer gattungsgemäßer Schrumpfring ist in EP0728979 A1 beschrieben.

### Abriss der Erfindung

Der Erfindung liegt die generelle Aufgabe zugrunde, Nachteile, wie sie bei bekannten Schrumpfringen auftreten, mindestens teilweise zu beseitigen. Eine speziellere Aufgabe kann darin gesehen werden, einen Schrumpfring anzugeben, der bei vorgegebener Festigkeit den Einsatz geringerer Bandstärken gestattet.

Die Lösung dieser Aufgabe gelingt dadurch, dass der Ring an beiden axialen Umfangskanten um einen Winkel von 70° bis 90° nach außen gebogen ist. Diese vorzugsweise durch Bördelung oder andere Umbiege- oder Umkant-Verfahren erzielte Umformung bewirkt nach dem Prinzip einer Sicke oder eines I-Trägers eine Erhöhung der Eigensteifigkeit des Rings, so dass sich ein Einknicken des Rings beim Schrumpfen auch bei geringeren Bandstärken vermeiden lässt.

Die Umformung bewirkt eine Durchmessererweiterung der Bandkanten, wobei die Bandkanten verrundet auswärts gebogen sind. Dadurch werden Beschädigungen des von dem Ring umschlossenen Schlauchmaterials vermieden.

### Zeichnung

Ausführungsbeispiele der Erfindung werden nachstehend anhand der Zeichnung näher erläutert. Darin zeigt:

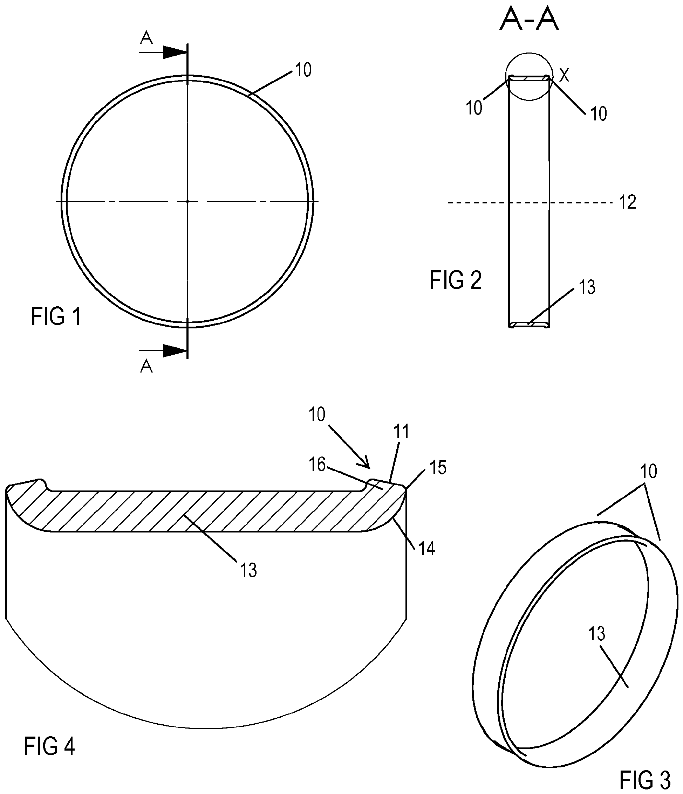

Fig. 1 eine axiale Seitenansicht eines erfindungsgemäßen Schrumpfrings mit gebördelten Umfangskanten,
Fig. 2 eine axiale Querschnittsansicht entlang der Linie A-A der Figur 1,
Fig. 3 eine perspektivische Ansicht des erfindungsgemäßen Schrumpfrings,
Fig. 4 einen Teil X der Figur 2 als vergrößerten Axialschnitt und
Fig. 5 ein Kraft-Weg-Diagramm mit dem computerbasierten Simulationsergebnis des Belastungsverhaltens von drei Schrumpfringen.

### Ausführungsbeispiele

Der in der Zeichnung dargestellte Ring weist eine konstante Bandstärke bzw. Banddicke auf und ist an seinen beiden Umfangskanten 10 radial derart auswärts gebördelt, dass die Schenkel 16 mit dem ungebördelten Mittelabschnitt 13 einen Winkel von ca. 70° bis ca. 90° einschließen. Besonders bevorzugt sind Winkel von ca. 75° bis ca. 85°.

In dem gezeigten Ausführungsbeispiel beträgt der Winkel etwa 80° und die im Wesentlichen geraden Stirnflächen 11 der Umfangskanten 10 verlaufen unter einem Winkel von etwa 10° zur Ringachse 12. Der radial weiter innen liegende Ringmittelabschnitt 13 endet beidseits mit einem verrundeten Bereich 14.

Die gesamte Innenfläche des Rings ist gegenüber dem von ihm umgebenen Schlauch (nicht gezeigt) frei von Kanten, wobei die radiale Höhe der Auswärtsbördelung vorzugsweise so groß ist, dass die axialen Enden 15 des inneren Ringabschnitts 13 auch bei starker Kompression während des Crimp-Vorgangs Abstand vom Schlauch haben. Der Mittelabschnitt 13 verläuft in Umfangsrichtung durchgängig, ohne Unterbrechung durch eine Schließe oder dergleichen.

Multi-Crimp-Ringe werden bei sensitiven Schlauchmaterialien, beispielsweise in der Fahrzeugindustrie in Ladeluft- oder Kühlungs-/Heizungssystemen angewendet. Bedingt durch die gängigen Schlauchtoleranzen entstehen unterschiedliche Kompressionsraten - mit hohen Werten bei großen Schlauchdicken bzw. geringen Werten bei kleinen Schlauchdicken. Durchmessertoleranzen in den Rohrstutzen erhöhen diesen Effekt.

Die Montage der Ringe erfolgt in der Regel wegabhängig; d.h. die Reduktion des Ringdurchmessers ist auf ein definiertes Maß eingestellt. Bedingt durch die genannten Toleranzen in Schlauchdicke und Rohrstutzen ergeben sich daher unterschiedliche Kompressionsraten; mit anderen Worten können die Kompressionsraten nicht eingestellt werden, sondern resultieren aus den Toleranzen in Schlauchdicke und Stutzendurchmesser.

Die Erfindung reduziert die Gefahr von Schlauchbeschädigungen bei gelichbleibender Leistung. Die durch den Ring im nicht-gebördelten mittleren Bereich erzeugte Kompressionsrate bleibt unverändert, während die gebördelten Randbereiche einen sanften Auslauf des komprimierten Schlauchs ergeben und somit das Schlauchmaterial schonen.

Vor allem aber erhöht die Bördelung der Umfangskanten 10 die Eigensteifigkeit des Rings. Dadurch erlaubt die Erfindung die Anwendung dünneren Bandmaterials für den Ring, ohne dass dadurch eine Verschlechterung der Festigkeit bzw. Formsteifigkeit des Rings in radialer Richtung hingenommen werden müsste. Versuche haben gezeigt, dass eine Verringerung der Banddicke um bis zu 20% bei gleicher Steifigkeit möglich ist, was eine entsprechende Materialersparnis bedeutet.

Um ein Einknicken des Rings beim Schrumpfen zu vermeiden, musste nämlich bisher eine gegenüber der eigentlich benötigten Leistung (Schlauchkompression) überdimensionierte Bandstärke verwendet werden. Die benötigten Kompressionsraten wären zwar auch mit geringeren Bandstärken zu erzielen; ohne Bördelung bestünde aber die Gefahr, dass der Ring bei der Kompression einknickt.

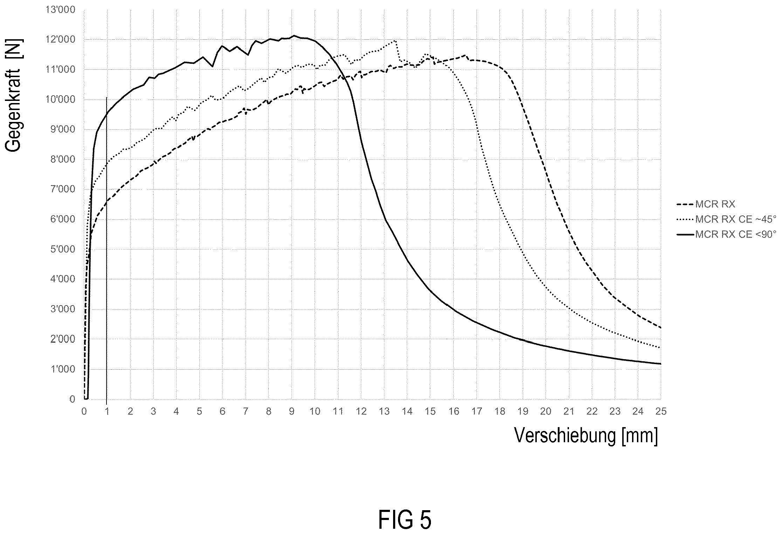

Die Verbesserung der Eigensteifigkeit des Schrumpfrings durch das nach außen Biegen der axialen Umfangskanten 10 wurde durch eine Computersimulation quantifiziert, die auf der Methode der finiten Elemente basiert. Die Ergebnisse sind in der Figur 5 veranschaulicht und werden im Folgenden erläutert.

Untersucht wurden drei Multi-Crimp-Ringe (MCR), die jeweils aus einem Stahlband hergestellt sind, dessen Stoßenden stumpf miteinander verschweißt wurden (sogenanntes "cross-welding" RX). Der erste Ring (MCR RX) ist an seinen Umfangskanten gar nicht nach außen gebogen, also ein einfacher Ring mit homogener Banddicke und in axialer Richtung gleichbleibendem Durchmesser von ca. 40 mm. Der zweite und der dritte Ring weisen jeweils nach außen gebördelte Umfangskanten ("curled edges" CE) auf und sind ansonsten identisch mit dem ersten Ring. Dabei verläuft der Schenkel 16 an den axialen Umfangskanten 10 des zweiten Rings (MCR RX CE-45°) in einem Aufstellwinkel von ca. 45° zu dem ungebördelten Mittelabschnitt 13 des Rings. Bei dem dritten Ring (MCR RX CE<90°) beträgt dieser Aufstellwinkel ca. 85°.

Simuliert wurde das Verhalten der drei Ringe mit einem sogenannten Halbschalenmodell. Dabei werden die Ringe nacheinander um eine Scheibe gelegt, die etwa den Durchmesser des durch Crimpen geschrumpften Rings hat und die aus zwei halbmondförmigen Schalen besteht. Die beiden Halbschalen werden in der Simulation nun entgegengesetzt zueinander bewegt und auf Basis einer Finite-Elemente-Analyse berechnet, wie sich die drei Ringe jeweils verhalten.

In der Figur 5 ist dargestellt, wie hoch die durch den Ring jeweils erzeugte Rückstellkraft in Abhängigkeit von der Verschiebung der beiden Halbschalen ist. Die für die Festigkeit des Rings maßgebliche Rückstell- oder Gegenkraft in Newton wird abhängig von der Aufweitung des Ringdurchmessers in Millimeter dargestellt, die durch die Entfernung der beiden Halbschalen voneinander bedingt ist. Zu erkennen ist, dass im Bereich einer Durchmesseraufweitung von bis zu 10 mm der dritte, stark umgebördelte Ring "MCR RX CE<90°" eine durchweg höhere Gegenkraft hervorbringt als der nur um ca. 45° umgebördelte zweite Ring "MCR RX CE-45°" und dieser wiederum eine durchweg höhere Gegenkraft als der nicht gebördelte erste Ring "MCR RX". Dabei ist anzumerken, dass nur der Bereich mit Durchmesseraufweitungen von bis zu ca. 1 mm technisch relevant ist. Bei stärkeren Aufweitungen des Durchmessers würde der Schrumpfring die durch den Crimp-Vorgang erzielte Durchmesserreduktion einbüßen, die für die dichtende Verbindung von Rohrstutzen und Schlauch durch den Schrumpfring erforderlich ist.

Vergleicht man jeweils die Werte der Gegenkraft an dem in der technischen Realität typischerweise relevanten Wert von 1 mm Durchmessererweiterung, so erhält man für den ersten Ring "MCR RX" eine Kraft von ca. 6.600 N, für den zweiten Ring "MCR RX CE-45°" eine Kraft von ca. 7.900 N und für den dritten Ring "MCR RX CE<90°" eine Kraft von ca. 9.600 N. Die Gegenkraft gegen radiales Aufweiten und damit die Festigkeit des dritten Rings gemäß dem Ausführungsbeispiel der vorliegenden Erfindung ist also gegenüber einem ungebördelten Ring um 45% und gegenüber einem nur um ca. 45° gebördelten Ring um immer noch 20% verbessert.

Zusammenfassend betrifft die vorliegende Erfindung einen Schrumpfring, dessen beide Umfangskanten 10 gebördelt sind, und der wegen seiner größeren Eigensteifigkeit daher die Anwendung dünnerer Bandstärken ohne die Gefahr eines Einknickens gestattet. Die Umfangskanten 10 enden in radial auswärts weisenden Schenkeln 16, die mit einem axial weiter innen liegenden und ungebördelten Mittelabschnitt 13 des Rings einen Winkel von ca. 70° bis 90° einschließen. Die Bördelung besteht in einer Durchmessererweiterung der Ringkanten, wobei die Ringkantenbereiche 14 verrundet auswärts gebogen sind und die Kantenflächen 11 unter einem Winkel von vorzugsweise ca. 0° bis ca. 20° zur Ringachse 12 verlaufen.

## Patentansprüche

1. Schrumpfring, der an beiden axialen Umfangskanten (10) gebördelt ist, **dadurch gekennzeichnet, dass** die Umfangskanten (10) in radial auswärts weisenden Schenkeln (16) enden, die zu einem axial weiter innen liegenden und ungebördelten Mittelabschnitt (13) des Rings unter einem Winkel von ca. 70° bis 90° verlaufen.

2. Schrumpfring nach Anspruch 1, wobei die Bördelung in einer Durchmessererweiterung der Umfangskanten (10) über den gesamten Ringumfang besteht.

3. Schrumpfring nach Anspruch 1 oder 2, wobei die zwischen dem Mittelabschnitt (13) und den Schenkeln (16) liegenden Kantenbereiche (14) des Rings verrundet auswärts gebogen sind.

4. Schrumpfring nach einem der vorstehenden Ansprüche, wobei die axial außen liegenden Stirnflächen (11) der Umfangskanten (10) unter einem Winkel von ca. 0° bis ca. 20° zur Ringachse (12) verlaufen.

5. Schrumpfring nach einem der vorstehenden Ansprüche, der über die gesamte Ringbreite eine im Wesentlichen homogene Banddicke aufweist.

6. Schrumpfring nach einem der vorstehenden Ansprüche, der aus einem zu einem Ring gebogenen Stahlband hergestellt ist, dessen Stoßenden stumpf miteinander verschweißt sind.

7. Schrumpfring nach einem der vorstehenden Ansprüche, der dazu ausgelegt ist, über einen Schlauch geschoben zu werden, um dann durch radiales Multicrimpen den Schlauch in seinem Überlappungsbereich mit einem Rohrstutzen auf diesen zu pressen.

## Claims

1. A shrink-fit ring which is flanged at both axial circumferential edges (10), **characterised in that** the circumferential edges (10) end in radially outwardly pointing limbs (16) which extend at an angle of approximately 70° to 90° to a central section (13) of the ring which lies axially further inwards and is not flanged.

2. The shrink-fit ring according to claim 1, wherein the flanging results in a diameter expansion of the circumferential edges (10) over the entire ring circumference.

3. The shrink-fit ring according to claim 1 or 2, wherein the edge regions (14) of the ring lying between the middle section (13) and the limbs (16) are bent outwards in a rounded manner.

4. The shrink-fit ring according to any preceding claim, wherein the axially outer end faces (11) of the circumferential edges (10) extend at an angle of approx. 0° to approx. 20° to the ring axis (12).

5. The shrink-fit ring according to any preceding claim, having a substantially homogeneous band thickness over the entire ring width.

6. The shrink-fit ring according to any preceding claim, made from a steel strip bent into a ring, the butt ends of which are butt-welded together.

7. The shrink-fit ring according to any preceding claim, which is designed to be slid over a hose in order to then press the hose in an area thereof which overlaps with a pipe socket by radial multi-crimping onto the pipe socket.

## Revendications

1. Bague de serrage qui est sertie sur les deux bords périphériques axiaux (10), **caractérisée en ce que** les bords périphériques (10) terminent en des branches (16) orientées radialement vers l'extérieur, qui vont jusqu'à un tronçon central (13) de la bague reposant plus loin axialement à l'intérieur et non serti, dans un angle d'environ 70° à 90°.

2. Bague de serrage selon la revendication 1, dans laquelle le sertissage consiste en un élargissement de diamètre des bords périphériques (10) sur tout le pourtour annulaire de la bague.

3. Bague de serrage selon la revendication 1 ou 2, dans laquelle les zones de bord (14) de la bague reposant entre le tronçon central (13) et les branches (16) sont recourbées arrondies vers l'extérieur.

4. Bague de serrage selon l'une des revendications précédentes, dans laquelle les faces avant (11) extérieures axiales des bords périphériques (10) sont dans un angle d'env. 0° à env. 20° par rapport à l'axe de la bague (12).

5. Bague de serrage selon l'une des revendications précédentes, qui présente une épaisseur de feuillard essentiellement homogène sur toute la largeur de bague.

6. Bague de serrage selon l'une des revendications précédentes, qui est fabriquée dans un feuillard d'acier recourbé en une bague dont les extrémités de jointure sont soudées entre elles de bout en bout.

7. Bague de serrage selon l'une des revendications précédentes, qui est conçue pour être poussée sur un tuyau pour presser le tuyau dans sa zone de chevauchement avec un support de tuyau sur celui-ci, par multisertissage radial.
